# EUROPÄISCHE PATENTSCHRIFT

(11) **EP 0 375 974 B1**
(45) Veröffentlichungstag und Bekanntmachung des Hinweises auf die Patenterteilung: **08.06.1994**
(21) Anmeldenummer: 89122058.4
(22) Anmeldetag: 29.11.1989
(51) Int. Cl.: C08G 77/62, C04B 35/58

(54) **Polysubstituierte chlorhaltige Silazanpolymere, Verfahren zu ihrer Herstellung, sowie deren Verwendung zur Herstellung Siliziumnitrid enthaltender keramischer Materialien**
Chlorine-containing polysubstituted silazane polymers, method for their preparation, and their use for preparing silicon nitride-containing ceramic materials
Polysilazanes polysubstitués contenant du chlore, leur procédé de préparation, et leur utilisation à préparer des matières céramiques contenant du nitrure de silicium

(30) Priorität: 03.12.1988 DE 3840779
(43) Veröffentlichungstag der Anmeldung: 04.07.1990
(73) Patentinhaber: HOECHST AKTIENGESELLSCHAFT, 65926 Frankfurt am Main (DE)
(72) Erfinder: Vaahs, Tilo, Dr., D-6233 Kelkheim(Taunus) (DE); Peuckert, Marcellus, Dr., D-6238 Hofheim am Taunus (DE); Brück, Martin, D-6238 Hofheim am Taunus (DE)

(56) Entgegenhaltungen:
- EP-A- 0 235 486
- DE-A- 3 736 914
- FR-A- 1 453 660
- FR-A- 2 599 745
- US-A- 4 720 532

## Beschreibung

Die Erfindung betrifft polysubstituierte chlorhaltige Silazanpolymere, ihre Herstellung, sowie ihre Weiterverarbeitung zu Siliziumnitrid enthaltendem keramischem Material.

Die Pyrolyse von Polysilazanen zu Siliziumnitrid enthaltendem keramischem Material wurde bereits in der Literatur (R.R. Wills et al., Ceramic Bulletin, Vol. 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen umgesetzt (US-PS 4 540 803, US-PS 4 543 344, US-PS 4 595 775, US-PS 4 397 828, US-PS 4 482 669).

Die vorliegende Erfindung stellt neue Ausgangsmaterialien für Polysilazane zur Verfügung, nämlich polysubstituierte chlorhaltige Silazanpolymere.

Ein Gegenstand der vorliegenden Erfindung ist ein Verfahren zur Herstellung von polysubstituierten chlorhaltigen Silazanpolymeren, dadurch gekennzeichnet, daß man Oligosilazane der Formel (I) 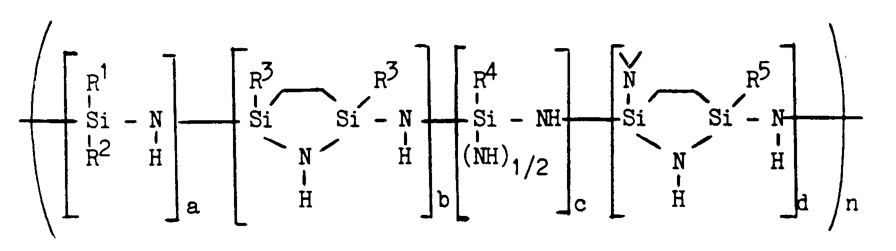
worin mindestens einer der Indizes a, b und mindestens einer der Indizes c, d ungleich 0 und n 2 bis 12 ist, mit mindestens einem der Chlorsilane Cl₂R⁶Si-CH₂CH₂-SiR⁶Cl₂, Cl₃Si-CH₂CH₂-SiR⁷Cl₂, R⁸SiCl₃ oder R⁹SiHCl₂ bei 30°C bis 300°C umsetzt, wobei unabhängig voneinander R¹, R², R⁴ = H, C₁-C₆-Alkyl oder C₂-C₆-Alkenyl und R³, R⁵, R⁶, R⁷, R⁸ , R⁹ = C₁-C₆-Alkyl oder C₂-C₆-Alkenyl ist.

Vorzugsweise ist unabhängig voneinander R¹, R², R⁴ = H, C₁-C₃-Alkyl oder C₂-C₃-Alkenyl und R³, R⁵, R⁶, R⁷, R⁸, R⁹ = C₁-C₃-Alkyl oder C₂-C₃-Alkenyl. Besonders bevorzugt ist der Fall, daß R¹ = H, R² = R³ = R⁵ = R⁶ = R⁷ = R⁹ = CH₃ und unabhängig voneinander R⁴, R⁸ = CH₃ oder Vinyl ist. a, b, c, d sind die Molfraktionen der jeweiligen Struktureinheiten, wobei a + b + c + d = 1 gilt. Vorzugsweise wählt man die Kombination a = 0.85 bis 0.98, d = 0.02 bis 0.15 und b=c=0.

Die erfindungsgemäß hergestellten polysubstituierten chlorhaltigen Silazanpolymeren werden im folgenden alternativ auch als polymere Chlorsilazane bezeichnet.
Die als Ausgangsprodukte eingesetzten Oligosilazane können dadurch erhalten werden, daß man überschüssigen Ammoniak mit einem Ausgangsmaterial, das mindestens eine der beiden Komponenten (II) R¹R²SiCl₂ und (III) Cl₂R³Si-CH₂CH₂-SiR³Cl₂, sowie mindestens eine der beiden Komponenten (IV) R⁴SiCl₃ und (V) Cl₃Si-CH₂CH₂-SiR⁵Cl₂ enthält, bei -70°C bis +100°C umsetzt, wobei unabhängig voneinander R¹, R², R⁴ = H, C₁-C₆-Alkyl oder C₂-C₆-Alkenyl und R³, R⁵ = C₁-C₆-Alkyl oder C₂-C₆-Alkenyl ist und der molare prozentuale Anteil an (II) oder (III) oder deren Gemisch im Ausgangsmaterial 30 bis 99 % beträgt, wobei die Umsetzung eines nur (II) und (III) enthaltenden Gemisches mit Ammoniak ausgeschlossen sein soll.

Die als Ausgangsmaterialien für die Oligosilazane eingesetzten Chlorsilane (II) R¹R²SiCl₂ und (IV) R⁴SiCl₃ sind im Handel erhältlich, die ethylenverbrückten Spezies (III) und (V) sind durch Hydrosilylierung von handelsüblichem R³HSiCl₂ und Ethin zugänglich, bzw. durch Hydrosilylierung von Vinyltrichlorsilan und R⁵HSiCl₂ (siehe Versuchsbericht).

Zur Herstellung der Oligosilazane werden vorzugsweise die Chlorsilane in einem Lösungsmittel vorgelegt, welches sich inert gegenüber den Reaktanten - Chlorsilane und NH₃ - verhält, und mit Ammoniak bis zur Sättigung vermischt, was dann eintritt, wenn sämtliche SiCl-Funktionen durch NH-Gruppen substituiert sind.

Für diese Reaktion geeignete Lösungsmittel sind z. B. gesättigte aliphatische oder aromatische Kohlenwasserstoffe wie n-Pentan, Cyclohexan, Toluol, chlorierte Kohlenwasserstoffe wie Chloroform oder Chlorbenzol, oder Ether wie Diethylether oder THF.

Gegebenenfalls kann bei der Herstellung der Oligosilazane auch unter vermindertem Druck gearbeitet werden, aber auch bei Drücken von 1 bis 100 bar. Ammoniak kann als Gas oder als Flüssigkeit zudosiert werden. Das Verfahren kann auch kontinuierlich gestaltet werden.

Vorzugsweise beträgt bei der Umsetzung zum polymeren Chlorsilazan das molare Verhältnis der Reaktanten Chlorsilan:Monomereneinheit des Oligosilazans (n = 1) 0,1:1 bis 1,5:1, insbesondere 0,1:1 bis 0,7:1.

Zur Umsetzung der Reaktanten miteinander werden vorzugsweise die Oligosilazane vorgelegt und mindestens eins der genannten Chlorsilane zugegeben. Da die Reaktion exotherm ist, wird beim Zusammengeben der Reaktanten vorzugsweise zunächst die Temperatur bei 30 bis 50°C gehalten. Anschließend erhitzt man auf Temperaturen von 100 bis 300°C, vorzugsweise auf 120 bis 250°C.

Das als Nebenprodukt gebildete NH₃ entweicht während der Reaktion teilweise. Nach beendeter Umsetzung wird der Rest an leichter flüchtigen Verbindungen im allgemeinen durch Anlegen von Vakuum aus dem Reaktionsgefäß entfernt.

Das bei der Reaktion ebenfalls entstehende NH₄Cl sublimiert im Verlauf der Reaktion zum größten Teil aus dem Reaktionsgemisch ab. Der eventuell verbliebene Rest des NH₄Cl kann durch Extraktion mit einem inerten organischen Lösungsmittel, wie n-Hexan, Toluol, Ether von dem erfindungsgemäß hergestellten polymeren Chlorsilazan abgetrennt werden.

Die Reaktionsdauer richtet sich nach der Geschwindigkeit des Aufheizens und der Reaktionstemperatur. Im allgemeinen genügt eine Reaktionszeit von 3 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete NH₄Cl unlöslich ist, kann letzteres durch Filtration abgetrennt werden. Die erfindungsgemäßen polymeren Chlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1,073 bis 10,13 bar kann gearbeitet werden.

Das Verfahren kann auch kontinuierlich gestaltet werden.

Die neuen polymeren Chlorsilazane können durch Umsetzung mit Ammoniak ("Ammonolyse") in Polysilazane überführt werden, die wiederum durch Pyrolyse in Siliziumnitrid enthaltendes keramisches Material umgewandelt werden können.

Die Ammonolyse kann in flüssigem NH₃ erfolgen. Es ist jedoch vorteilhaft, sie in einem organischen Lösungsmittel durchzuführen. Geeignet sind alle Lösungsmittel, die sich inert gegenüber den polymeren Chlorsilazanen verhalten. Bevorzugt sind solche Lösungsmittel, in denen das als Nebenprodukt anfallende Ammoniumchlorid geringe Löslichkeit und gute Abtrennbarkeit aufweist, z.B. Ether, aliphatische und aromatische Kohlenwasserstoffe, chlorierte Kohlenwasserstoffe. Die Reaktanten können bei der Ammonolyse in beliebiger Reihenfolge in das Reaktionsgefäß eingespeist werden. Es ist jedoch zumeist vorteilhaft, das polymere Chlorsilazan in Lösung vorzulegen und gasförmigen Ammoniak einzuleiten oder flüssigen Ammoniak hinzuzufügen. Wurden die erfindungsgemäßen polymeren Chlorsilazane in einem geeigneten organischen Lösungsmittel hergestellt, so kann die Ammonolyse ohne vorherige Abtrennung des NH₄Cl in diesem Lösungsmittel durchgeführt werden. Die Ammonolyse wird vorzugsweise mit einem Überschuß NH₃ durchgeführt, um sicher zu gehen, daß die Reaktion vollständig ist und die Endprodukte möglichst weitgehend chlorfrei sind. Im allgemeinen reicht für diesen Zweck die doppelte stöchiometrische Menge.

Im allgemeinen wird bei einer Temperatur von etwa -50 bis +100°C gearbeitet, vorzugsweise bei -20 bis +30°C, insbesondere bei Raumtemperatur (wobei mit Eis gekühlt wird). Es ist jedoch auch möglich, oberhalb Raumtemperatur, z.B. bei der Siedetemperatur des verwendeten Lösungsmittels, oder unterhalb Raumtemperatur, z.B. bei -33°C bei der Verwendung von flüssigem NH₃ zu arbeiten.

Nach beendeter Ammonolyse wird gegebenenfalls das überschüssige NH₃ entfernt und das angefallene Ammoniumchlorid abfiltriert. Zur Erhöhung der Ausbeute kann der Niederschlag mit einem der obengenannten organischen Lösungsmittel gewaschen werden. Nach Abdestillation des Lösungsmittels bei vermindertem Druck werden die Polysilazane unmittelbar als weiße Pulver erhalten. Die Polysilazane sind in den obigen organischen Lösungsmitteln löslich, so daß diese sowohl für das Beschichten von Oberflächen als auch für die Herstellung von Fasern verwendet werden können.

Die Polysilazane können durch Pyrolyse in inerter Stickstoff- oder Argonatmosphäre bei Temperaturen von 800 bis 1200°C zu amorphen, dichten Materialien pyrolysiert werden, die im wesentlichen aus Si, N und C bestehen und in Spuren auch H und O enthalten können. Bei Pyrolysetemperaturen oberhalb 1200°C, etwa im Bereich von 1200°C bis 1400°C, entstehen teilamorphe, mikrokristalline keramische Werkstoffe, die als kristalline Phase a-Si₃N₄ enthalten.

Ein besonderer Vorteil ist, daß sich die Polysilazane vor der Pyrolyse nach verschiedenen Verfahren zu dreidimensionalen Formkörpern formen lassen.

Eine wichtige Methode der Formgebung ist das Ziehen von Fasern. Dabei lassen sich Fasern aus hochviskosen Lösungen des Polysilazans in Lösungsmitteln, wie Toluol, THF oder Hexan ziehen. Das Faserziehen geschieht vorteilhafterweise mittels Spinndüsen von 80 bis 150 »m Durchmesser. Durch anschließendes Strecken wird der Faden verjüngt, so daß nach der Pyrolyse ein sehr fester Faden von 2 bis 20 »m, insbesondere 5 bis 15 »m Durchmesser entsteht. Die durch anschließende Pyrolyse hergestellten Fasern finden Verwendung als mechanische Verstärkungseinlagerung in faserverstärktem Aluminium, Aluminiumlegierungen und Keramikbauteilen.

Eine weitere wichtige Verarbeitungsmöglichkeit der Polysilazane ist die Herstellung dichter, gut haftender, amorpher oder mikrokristalliner keramischer Beschichtungen auf Metallen, insbesondere Stählen. Die Beschichtung erfolgt mit Hilfe einer Lösung des Polysilazans in organischen Lösungsmitteln wie Toluol, THF, Hexan. Die pyrolytische Umwandlung in eine amorphe bzw. kristalline Schicht erfolgt im gleichen Temperaturbereich von 800 bis 1200°C bzw. 1200 bis 1400°C unter Inertgas wie oben bei dreidimensionalen Formkörpern beschrieben.

Die keramischen Beschichtungen eignen sich wegen ihrer hervorragenden Haftung, hohen Härte und Oberflächengüte besonders zur Oberflächenveredlung von mechanisch und chemisch beanspruchten Maschinenbauteilen.

Weiter kann man die oben beschriebenen Polysilazane mit gleichhoher keramischer Ausbeute von 70 bis 90% statt in Inertags auch in NH₃-Atmosphäre pyrolysieren. Dabei resultiert ein praktisch kohlenstofffreier, glasklarer, farbloser Werkstoff. Bei der Pyrolyse in NH₃ bei 1000°C oder höher liegt der C-Gehalt unterhalb 0,5 Gew.-%. Das Pyrolyseprodukt besteht je nach Pyrolysetemperatur aus praktisch reinem amorphem Siliziumnitrid (Pyrolyse unterhalb 1200°C) oder kristallinem Si₃N₄ (Pyrolyse oberhalb 1200°C, insbesondere oberhalb 1300°C). Die Pyrolyse in NH₃ läßt sich auf alle nach den oben beschriebenen Formgebungsverfahren hergestellten Formkörpern, also aus Pulvern geformte Körper, Fasern, Beschichtungen anwenden.

Vorzugsweise führt man jedoch die Umwandlung der polymeren Chlorsilazane in Siliziumnitrid enthaltendes keramisches Material so durch, daß man die intermediär entstehenden Polysilazane nicht isoliert. In diesem Fall setzt man die polymeren Chlorsilazane vorzugsweise mit gasförmigem Ammoniak um und pyrolysiert das dabei entstehende Reaktionsgemisch in Ammoniakatmosphäre.

### Beispiel 1

### Herstellung eines Polymeren durch Reaktion eines Oligomeren der Formel (I) (a = 0,42, b = 0,20, c = 0,38, d = 0; R¹ = H, R² = R³ = R⁴ = CH₃) mit CH₃SiCl₃

a) Herstellung des Oligomeren
   In einem 2-1-Vierhalskolben mit Rührvorrichtung, Kühlung und Gaseinleitungsmöglichkeit wurden in 1,5 l absolutem THF 50 ml (55,7 g, 0,48 Mol) CH₃SiHCl₂, 50 ml (60 g, 0,23 Mol) Cl₂CH₃Si-CH₂CH₂-SiCH₃Cl₂ und 50 ml (63,6 g, 0,43 Mol) CH₃SiCl₃ gelöst und vermischt. Anschließend leitete man bei Temperaturen zwischen 0°C und 10°C Ammoniak bis zur Sättigung ein. Nach beendeter Reaktion ließ man auftauen und trennte das gebildete Ammoniumchlorid ab.
   Das Filtrat wurde bei Unterdruck bis ca. 10 mbar und ca. 40°C von THF und den anderen flüchtigen Bestandteilen befreit. Zurück blieb das lösungsmittelfreie Oligosilazan als klares, leichtbewegliches Öl (74,5 g).
b) Herstellung des Polymeren
   Das Oligosilazan wurde in 150 ml Toluol gelöst und vorsichtig mit 45,3 ml (57,6 g, 0,38 Mol) CH₃SiCl₃ versetzt. Dabei stieg die Innentemperatur auf 48°C an. Anschließend wurde 2 Stunden zum Rückfluß erhitzt, wobei sich ein farbloser Niederschlag bildete. Danach wurde das Lösungsmittel bei Unterdruck in eine -78°C kalte Kühlfalle destilliert, wobei die Temperatur des Ölbades alle 15 Minuten um 10°C erhöht und der Druck im Kolbeninneren etwa erniedrigt wurde, so daß bei 220°C schließlich 0,1 mbar erreicht waren.
   Dabei sublimierte ein Teil der Reaktionsmischung an die kälteren Teile des Gefäßes, und es blieb eine klare Schmelze zurück. Beim Abkühlen wurde diese zäher und schließlich fest; bei 20°C war die resultierende Substanz glasartig spröde und klar durchscheinend.
   Ausbeute: 75,3 g
   Analysendaten: Si 35,6% N, 13,4% Cl, 16,3% O, <0,3%

### Beispiel 2

### Herstellung eines Polymeren durch Reaktion eines Oligomeren der Formel (I) (a = b = c = d = 0,25; R¹ = R² = R³ = R⁴ = R⁵ = CH₃) mit Cl₃Si-CH₂CH₂-SiCH₃Cl₂

Es wurde analog Beispiel 1 gearbeitet.
a) Herstellung des Oligomeren
   Eingesetzte Chlorsilane:
   33,9 g (31,9 ml, 0,26 Mol) (CH₃)₂SiCl₂
   67,4 g (56,2 ml, 0,26 Mol) Cl₂CH₃Si-CH₂CH₂-SiCH₃Cl₂
   39,3 g (30,9 ml, 0,26 Mol) CH₃SiCl₃
   72,8 g (60,6 ml, 0,26 Mol) Cl₃Si-CH₂CH₂-SiCH₃Cl₂
   Ausbeute: 85 g
b) Herstellung des Polymeren
   85 g Oligomeres wurden mit 80,6 ml (96,8 g, 0,35 Mol) Cl₃Si-CH₂CH₂-SiCH₃Cl₂ umgesetzt.
   Ausbeute: 88,2 g
   Analysendaten: Si 34,2 %, N 14,1 %, Cl 18,2 %, O <0,3%

### Beispiel 3

### Herstellung eines Polymeren durch Reaktion eines Oligomeren der Formel (I) (a = 0,64, b = 0,16, c = 0,2, d = 0; R¹ = H, R² = R³ = CH₃, R⁴ = Vinyl) mit Cl₃Si-CH₂CH₂-SiCH₃Cl₂

Es wurde analog Beispiel 1 gearbeitet.
a) Herstellung des Oligomeren
   Eingesetzte Chlorsilane:
   100,3 g (90 ml, 0,78 Mol) CH₃SiHCl₂
   48,0 g (40 ml, 0,19 Mol) Cl₂CH₃Si-CH₂CH₂-SiCH₃Cl₂
   38,1 g (30 ml, 0,24 Mol) Vinyl-SiCl₃
   Ausbeute: 92 g
b) Herstellung des Polymeren
   92 g Oligomeres wurden mit 132,7 g (110,6 ml, 0,48 Mol) Cl₃Si-CH₂CH₂-SiCH₃Cl₂ umgesetzt.
   Ausbeute: 152,4 g
   Analysendaten: Si 32,1 %, N 15,2 %, Cl 15,8 %, O <0,3 %

## Patentansprüche

1. Verfahren zur Herstellung von polysubstituierten chlorhaltigen Silazanpolymeren, dadurch gekennzeichnet, daß man Oligosilazane der Formel (I) 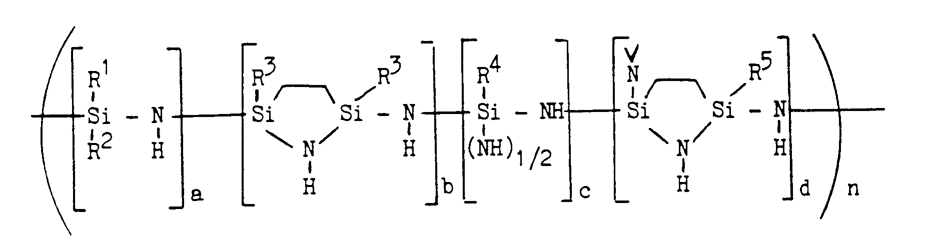 worin mindestens einer der Indizes a, b und mindestens einer der Indizes c, d ungleich 0 und n 2 bis 12 ist, mit mindestens einem der Chlorsilane Cl₂R⁶Si-CH₂CH₂-SiR⁶Cl₂, Cl₃Si-CH₂CH₂-SiR⁷Cl₂, R⁸SiCl₃ oder R⁹SiHCl₂ bei 30°C bis 300°C umsetzt, wobei unabhängig voneinander
R¹, R², R⁴ = H, C₁-C₆-Alkyl oder C₂-C₆-Alkenyl und R³, R⁵, R⁶, R⁷, R⁸, R⁹ = C₁-C₆-Alkyl oder C₂-C₆-Alkenyl ist.

2. Verfahren zur Herstellung von polysubstituierten chlorhaltigen Silazanpolymeren, dadurch gekennzeichnet, daß man in einer ersten Stufe Oligosilazane gemäß Anspruch 1 durch Reaktion eines Ausgangsmaterials, das mindestens eine der beiden Komponenten (II) R¹R²SiCl₂ und (III) Cl₂R³Si-CH₂CH₂-SiR³Cl₂ sowie mindestens eine der beiden Komponenten (IV) R⁴SiCl₂ und (V) Cl₃Si-CH₂CH₂-SiR⁵Cl₂ enthält, bei -70 bis +100°C mit überschüssigem Ammoniak herstellt, wobei der molare prozentuale Anteil an (II) oder (III) oder deren Gemisch im Ausgangsmaterial 30 bis 99 % beträgt und die Umsetzung eines nur (II) und (III) enthaltenden Gemisches mit Ammoniak ansgeschlossen sein soll, und dann in einer zweiten Stufe die Oligosilazane gemäß Anspruch 1 mit mindestens einem Chlorsilan umsetzt.

3. Verfahren nach Anspruch 1 oder 2, dadurch gekennzeichnet, daß unabhängig voneinander R¹, R², R⁴ = H, C₁-C₃-Alkyl oder C₂-C₃-Alkenyl und R³, R⁵, R⁶, R⁷, R⁸, R⁹ = C₁-C₃-Alkyl oder C₂-C₃-Alkenyl ist.

4. Verfahren nach Anspruch 1 oder 2, dadurch gekennzeichnet, daß R¹ = H, R² = R³ = R⁵ = R⁶ = R⁷ = R⁹ = CH₃ und unabhängig voneinander R⁴, R⁸ = CH₃ oder Vinyl ist.

5. Polysubstituierte chlorhaltige Silazanpolymere, erhältlich nach dem Verfahren gemäß einem der Ansprüche 1 bis 4.

## Claims

1. A process for the preparation of polysubstituted chlorine-containing silazane polymers, which comprises reacting oligosilazanes of formula (I) 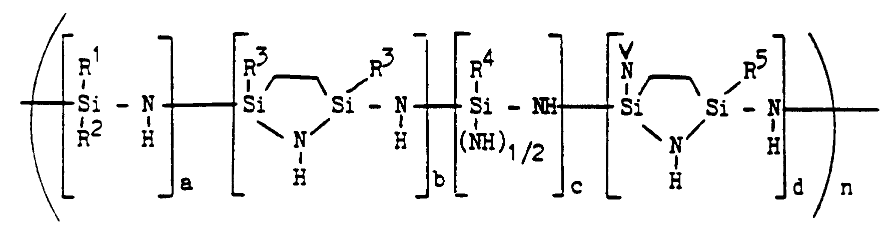 in which at least one of the indices a and b and at least one of the indices c and d are not equal to 0 and n is 2 to 12, with at least one of the chlorosilanes Cl₂R⁶Si-CH₂CH₂-SiR⁶Cl₂, Cl₃Si-CH₂CH₂-SiR⁷Cl₂, R⁸SiCl₃ or R⁹SiHCl₂ at 30°C to 300°C, where the radicals independently of one another have the following meanings:
R¹, R², R⁴ = H, C₁-C₆ alkyl or C₂-C₆ alkenyl and R³, R⁵, R⁶, R⁷, R⁸, R⁹ = C₁-C₆ alkyl or C₂-C₆ alkenyl.

2. A process for the preparation of polysubstituted chlorine-containing silazane polymers, which comprises in a first stage preparing oligosilazanes, as claimed in claim 1, by reacting a starting material containing at least one of the two components (II) R¹R²SiCl₂ and (III) Cl₂R³Si-CH₂CH₂-SiR³Cl₂ and at least one of the two components (IV) R⁴SiCl₂ and (V) Cl₃Si-CH₂CH₂-SiR⁵Cl₂ with excess ammonia at -70 to +100°C, where the molar percentage of (II) or (III) or a mixture thereof in the starting material is 30 to 99% and the reaction of a mixture containing only (II) and (III) with ammonia shall be excluded, and then in a second stage reacting the oligsilazanes with at least one chlorosilane, according to claim 1.

3. A process as claimed in claim 1 or 2, wherein the radicals independently of one another have the following meanings:
R¹, R², R⁴ = H, C₁-C₃ alkyl or C₂-C₃ alkenyl and R³, R⁵, R⁶, R⁷, R⁸, R⁹ = C₁-C₃ alkyl or C₂-C₃ alkenyl.

4. A process as claimed in claim 1 or 2, wherein R¹ = H, R² = R³ = R⁵ = R⁶ = R⁷ = R⁹ = CH₃ and R⁴ and R⁸ independently of one another are CH₃ or vinyl.

5. A polysubstituted chlorine-containing silazane polymer which can be obtained by the process as claimed in any of claims 1 to 4.

## Revendications

1. Procédé de préparation de polymères de silazanes chlorés polysubstitués, procédé caractérisé en ce que l'on fait réagir des oligosilazanes de formule (I) ci-dessous : 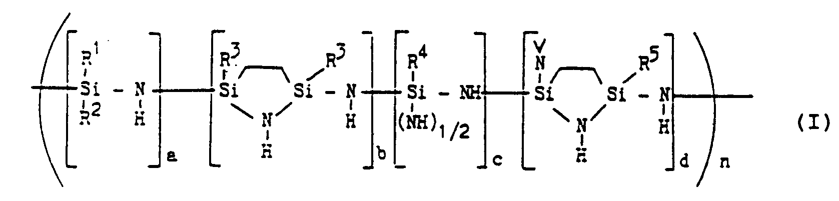 (dans laquelle l'un au moins des indices a et b et l'un au moins des indices c et d sont différents de 0 et n est un nombre de 2 à 12) avec un ou plusieurs des chlorosilanes Cl₂R⁶Si-CH₂CH₂-SiR⁶Cl₂, Cl₃Si-CH₂CH₂-SiR⁷Cl₂, R⁸SiCl₃ et R⁹SiHCl₂, à des températures de 30 à 300°C, R¹, R² et R⁴ étant chacun, indépendamment les uns des autres, l'hydrogène, un alkyle en C₁-C₆ ou un alcényle en C₂-C₆, et R³, R⁵, R⁶, R⁷, R⁸ et R⁹ un alkyle en C₁-C₆ ou un alcényle en C₂-C₆.

2. Procédé de préparation de polymères de silazanes chlorés polysubstitués, procédé caractérisé en ce que dans une première étape on forme des oligosilazanes selon la revendication 1 par réaction avec un excès d'ammoniac d'une matière comprenant l'un des deux composants (II) R¹R²SiCl₂ et (III) Cl₂R³Si-CH₂CH₂-SiR³Cl₂, ou ces deux composants à la fois, ainsi que l'un des deux composants (IV) R⁴SiCl₂ et (V) Cl₃Si-CH₂CH₂-SiR⁵Cl₂ ou également ces deux à la fois, entre -70°C et +100°C, le pourcentage molaire du composant (II) ou (III) ou des deux dans cette matière étant de 30 à 99 %, mais avec exclusion de la réaction avec l'ammoniac d'un mélange ne contenant que les composants (II) et (III), puis dans une seconde étape on fait réagir avec un ou plusieurs chlorosilanes les oligosilazanes ainsi formés, selon la revendication 1.

3. Procédé selon la revendication 1 ou 2, procédé caractérisé en ce que indépendamment les uns des autres R¹, R² et R⁴ sont chacun l'hydrogène ou bien un alkyle en C₁-C₃ ou un alcényle en C₂-C₃ et R³, R⁵, R⁶, R⁷, R⁸ et R⁹ un alkyle en C₁-C₃ ou un alcényle en C₂-C₃.

4. Procédé selon la revendication 1 ou 2, caractérisé en ce que R¹ est l'hydrogène, R², R³, R⁵, R⁶, R⁷ et R⁹ sont chacun le groupe CH₃ et R⁴ et R⁸ indépendamment les uns des autres le groupe CH₃ ou vinyle.

5. Polymères de silazanes chlorés et polysubstitués pouvant être obtenus par le procédé de l'une des revendications 1 à 4.
